# EUROPÄISCHE PATENTSCHRIFT

(11) **EP 3 452 380 B1**
(45) Veröffentlichungstag und Bekanntmachung des Hinweises auf die Patenterteilung: **01.04.2020**
(21) Anmeldenummer: 17723651.0
(22) Anmeldetag: 03.05.2017
(51) Int. Cl.: B65C 9/04, H02K 5/10, H02K 7/00, F16J 15/34, H02K 5/124, H02K 5/15, H02K 7/14, H02K 11/21, H02K 11/22, H02K 5/173

(54) **BEHÄLTERBEHANDLUNGSMASCHINE MIT EINEM DREHTELLERDIREKTANTRIEB**
CONTAINER HANDLING MACHINE HAVING A ROTARY PLATE DIRECT DRIVE
MACHINE DE MANIPULATION DE RÉCIPIENTS COMPRENANT UN ENTRAÎNEMENT DIRECT DE PLATEAU TOURNANT

(30) Priorität: 03.05.2016 DE 102016207583
(43) Veröffentlichungstag der Anmeldung: 13.03.2019
(73) Patentinhaber: Krones AG, 93073 Neutraubling (DE); Baumüller DirectMotion GmbH, 37581 Bad Gandersheim (DE)
(72) Erfinder: TRIEBEL, Joerg, 93073 Neutraubling (DE); HAFNER, Dieter, 93073 Neutraubling (DE); MEISSNER, Soeren, 93073 Neutraubling (DE); PFLÜGER, Jürgen, 37176 Nörten-Hardenberg (DE)
(74) Vertreter: Grünecker Patent- und Rechtsanwälte PartG mbB
(86) Internationale Anmeldenummer: PCT/EP2017/060485
(87) Internationale Veröffentlichungsnummer: WO 2017/191166

(56) Entgegenhaltungen:
- EP-A1- 3 056 777
- JP-A- 2014 206 265
- US-A1- 2007 284 958
- US-B1- 6 172 436

## Beschreibung

Die Erfindung betrifft eine Behälterbehandlungsmaschine mit den Merkmalen des Oberbegriffs von Anspruch 1.

Eine Behälterbehandlungsmaschine kann beispielsweise als Etikettiermaschine mit Etikettieraggregaten, einem Transportkarussell und daran umfänglich angeordneten Behälteraufnahmen ausgebildet sein, wobei die Behälter zunächst in den Behälteraufnahmen aufgenommen und anschließend zur Etikettierung an den Etikettieraggregaten vorbeigeführt werden. Beim Vorbeilauf wird die Behälteraufnahme synchron mit dem Aufbringen des Etiketts geschwenkt, so dass das Etikett möglichst gleichmäßig auf dem Behälterumfang aufgebracht wird. Dazu weisen die Behälteraufnahmen jeweils einen Drehteller auf, der mit einem Drehtellerdirektantrieb drehbar ist. Dadurch kann jeder Drehteller individuell von einer Maschinensteuerung für den Etikettierprozess angesteuert werden und ist so besonders flexibel auf verschiedene Etiketten- und Behältertypen anpassbar. Zum Schutz des Drehtellerdirektantriebs gegen Verschmutzungen dient ein Wellendichtsystem, mit dem das Innere des Motors gegenüber Verschmutzungen geschützt wird.

Beispielsweise offenbart die EP 1,596,488 A2 einen Antriebsmotor für den Flaschendrehteller einer Rundläufer-Etikettiermaschine, bei dem das Drehmoment von der Antriebswelle über Verbindungselemente auf den Drehteller übertragen wird. Eines der Verbindungselemente ist als Antriebselement in einem Lagerschild mit Kugellagern drehbar gelagert und mit Dichtelementen gegen Schmutz abgedichtet.

Der zweiteilige Aufbau der Welle zum Drehteller hin bestehend aus Antriebswelle und Antriebselement dient üblicherweise dazu, dass das Antriebselement aus einem härteren Material als die Antriebswelle gefertigt werden kann, so dass im Bereich Dichtelemente ein besonders geringer Verschleiß entsteht.

Nachteilig dabei ist, dass die Herstellung vergleichsweise teuer ist und dass dafür im Bereich der Lagerung ein entsprechend großer Bauraum benötigt wird.

Die US 2007/0284958 A1 offenbart einen Motor gemäß dem Oberbegriff des Anspruchs 1, und zwar zum Antrieb einer Behälterhaltungsplatte in einer Etikettiermaschine.

Die JP 2014-206265 A offenbart ein Wellenbewegungsgetriebe und einen Hohlwellenantrieb.

Die EP 3 056 777 A1 offenbart eine Behälterbehandlungsmaschine mit einem Drehtellerdirektantrieb.

Aufgabe der vorliegenden Erfindung ist daher, eine Behälterbehandlungsmaschine mit einem Drehtellerdirektantrieb zum Antrieb des Drehtellers bereitzustellen, der in der Herstellung weniger aufwendig ist und weniger Bauraum benötigt.

Zur Lösung dieser Aufgabenstellung stellt die Erfindung eine Behälterbehandlungsmaschine mit den Merkmalen des Anspruchs 1 bereit. Vorteilhafte Ausführungsformen sind in den Unteransprüchen genannt.

Dadurch, dass die Welle ab dem Rotor und durch das Wellendichtsystem hindurch einteilig ausgebildet ist, kann der Durchmesser der Welle kleiner ausgeführt werden als bei einer zweiteiligen Anordnung. Folglich kann im Bereich des Lagerschilds der benötigte Bauraum und damit Material eingespart werden.

Dadurch, dass die erste Lauffläche von der Übertragung des Antriebsdrehmoments entkoppelt mit der Welle mitdrehend verbunden ist, kann das Wellendichtsystem besonders im Hinblick auf die Dichtwirkung und einen geringen Verschleiß des Wellendichtsystems optimiert werden. Dagegen kann die Welle besonders stabil zur Übertragung des Antriebsdrehmoments ausgelegt werden. Dementsprechend kann unabhängig von der Welle der konstruktive Aufbau und das Material der ersten Lauffläche gewählt werden. Dadurch kann das Wellendichtsystem einfacher und damit kostengünstiger aufgebaut werden.

Die Behälterbehandlungsmaschine, beispielsweise eine Etikettiermaschine, kann ein Transportkarussell mit den umfänglich angeordneten Behälteraufnahmen mit jeweils einem Drehteller und einem Drehtellerdirektantrieb umfassen. Das Transportkarussell der Behälterbehandlungsmaschine kann um eine vertikale Achse mittels eines Antriebs drehbar ausgebildet sein. "Vertikal" kann hier bedeuten, dass dies die Richtung ist, die auf den Erdmittelpunkt gerichtet ist. Die Behälterbehandlungsmaschine kann in einer Behälterherstellungs- und/oder Getränkeverarbeitungsanlage angeordnet sein. Die Behälterbehandlungsmaschine kann einer Abfüllanlage zum Abfüllen eines Produkts in die Behälter vor- oder nachgeordnet sein. Die Vorrichtung kann auch einer Streckblasmaschine für Kunststoff-Flaschen nachgeordnet sein. Die Behälterbehandlungsmaschine kann eine Ausstattungsmaschine, wie eine Etikettier- und/oder Bedruckungsmaschine, für Behälter sein. Jeweils eine Behälteraufnahme kann den Drehteller und den Drehtellerdirektantrieb mit dem Wellendichtsystem umfassen.

Die wenigstens eine Behälteraufnahme kann zum Transport der Behälter vorgesehen sein. Die Behälteraufnahme kann zusätzlich eine Zentrierglocke, eine Halteklammern oder dergleichen zur Positionierung eines Behälters in der Aufnahme umfassen. Der Drehtellerdirektantrieb kann zum Rotieren und/oder Schwenken des Drehtellers ausgebildet sein.

Die mit der Behälterbehandlungsmaschine zu behandelnden Behälter können dafür vorgesehen sein, Getränke, Hygieneartikel, Pasen, chemische, biologische und/oder pharmazeutische Produkte aufzunehmen. Die Behälter können Kunststofflaschen, Glasflaschen, Dosen und/oder Tuben sein. Bei den Kunststoffbehältern kann es sich im speziellen um PET-, PEN-, HD-PE- oder PP-Behälter handeln. Ebenso kann es sich um biologisch abbaubare Behälter handeln, deren Hauptbestandteil aus nachwachsenden Rohstoffen, wie zum Beispiel Zuckerrohr, Weizen oder Mais bestehen.

Die Welle des Drehtellerdirektantriebs kann vertikal angeordnet sein. Der Motor kann ein positionsregelbarer Elektromotor sein, vorzugsweise ein Servomotor oder ein Torque-Motor. Denkbar sind jegliche Arten von Elektromotoren (beispielsweise ein Gleichstrom-, Asynchron- oder Synchronmotor), die mit einem geschlossenen Regelkreis betrieben werden. Grundsätzlich denkbar wäre auch ein Schrittmotor mit oder ohne geschlossenen Regelkreis. Der Motor kann ein Gehäuse umfassen, in dem der Stator, der Rotor, die Welle und/oder das Wellendichtsystem angeordnet sind. Die Welle des Motors kann ab dem Wellendichtsystem direkt oder über ein oder mehrere Verbindungselemente mit dem Drehteller verbunden sein. Der Drehteller kann vertikal über dem Drehtellerdirektantrieb angeordnet sein.

Ein Lagerschild kann zur Lagerung der Welle ausgebildet sein. Das Lagerschild kann Teil des Motorgehäuses sein, vorzugsweise Teil einer vertikal oben liegenden Stirnseite des Drehtellerdirektantriebs. Die Welle kann im Motorgehäuse über ein, zwei oder mehrere Lager drehbar gelagert sein, vorzugsweise um eine Antriebsachse. Wenigstens eines der Lager kann im Lagerschild angeordnet sein. Das eine bzw. die Lager können jeweils unabhängig voneinander als Wälzlager, vorzugsweise als Kugel-, Zylinderrollen- oder Kegelrollenlager ausgebildet sein.

Dass das Wellendichtsystem "zur Abdichtung der Welle" geeignet ist, kann hier bedeuten, dass damit ein Innenraum des Motors mit dem Rotor und dem Stator gegenüber einer äußeren Umgebung abgedichtet wird. Vorzugsweise dient das Wellendichtsystem zur Abdichtung des Innenraums des Motors zum Drehteller hin. Das Wellendichtsystem kann an der äußeren oben liegenden Stirnseite des Drehtellerdirektantriebs angeordnet sein. Vorzugsweise kann das Lagerschild und/oder das Motorgehäuse zur Aufnahme der wenigstens einen Dichtlippe ausgebildet sein. Bei dem Wellendichtsystem kann die wenigstens eine Dichtlippe drehfest (also ohne Relativbewegung) mit dem Lagerschild bzw. dem Motorgehäuse verbunden sein und gegen die mit der Welle mitdrehend verbundene Lauffläche wirken. Die Lauffläche bewegt sich also mit der Welle mit und bildet für die gegenüber dem Motorgehäuse stationäre Dichtlippe einen Reibpartner. Die Dichtlippe kann Teil einer Dichtungskassette sein, die zur Wartung auswechselbar ausgebildet ist. Die wenigstens eine Dichtlippe kann wenigstens teilweise aus einem flexiblen Material, beispielsweise Gummi, Silikon oder dergleichen bestehen. Zwischen wenigstens zwei Dichtlippen kann ein Vorrat mit Schmiermittel vorhanden sein. Die Lauffläche kann wenigstens teilweise aus Metall, beispielsweise Stahl, vorzugsweise aus gehärtetem Stahl bestehen. Andere Materialien, wie Keramik oder Messing sind ebenso als Lauffläche einsetzbar. Denkbar ist, dass das Wellendichtsystem zwei oder mehrere Dichtlippen umfasst, die gegen die Lauffläche wirken.

Nach einem nicht unter die Erfindung fallenden Ausführungsbeispiel kann das Wellendichtsystem ein kreisscheibenförmiges Element mit der Lauffläche und einer die Welle umschließenden Durchführung umfassen, wobei das kreisscheibenförmige Element die von der Übertragung des Antriebsdrehmoments entkoppelte Verbindung zwischen der Welle und der Lauffläche bildet. Dadurch, dass kein Antriebsdrehmoment mit dem kreisscheibenförmigen Element übertragen wird, kann die Welle einerseits besonders für die Übertragung des Antriebsdrehmoments zum Drehteller hin und das kreisscheibenförmige Element besonders für die Dichtwirkung ausgelegt werden. Folglich kann also die Welle aus einem weicheren Material bestehen, da sie nicht mehr mit der Dichtlippe in Kontakt kommt und so keinen Verschleiß erfährt. Folglich kann die einteilige Welle einfacher hergestellt werden. Dagegen kann das kreisscheibenförmige Element für die Bereitstellung der Dichtwirkung aus einem speziell dafür geeigneten Material hergestellt werden, beispielsweise aus einem gehärteten Metall. Das gehärtete Metall kann ein nicht rostentender Stahl sein, der beispielsweise eine Härte von 55 -58 HRC aufweist und vorzugsweise drallfrei geschliffen ist. Als Werkstoff für das kreisscheibenförmige Element kann beispielsweise 1.4034 (Kurzname X46Cr13) oder ein vergleichbares Material verwendet werden. Die Lauffläche kann ein Oberflächenrauheit von Ra = 0,2 bis 0,8 µm, Rz = 1,0 bis 4,0 µm und Rmax. 6,3 µm aufweisen. Dadurch wird ein hoher Verschleiß durch die gegen die Lauffläche wirkende Dichtlippe vermieden und das Wartungsintervall kann erhöht werden. Beim Betrieb des Drehtellerdirektantriebs können so weitere Kosten eingespart werden. Darüber hinaus kann das kreisscheibenförmige Element auch bezüglich des Bauraums kompakt ausgelegt werden, da es keiner Ermüdung durch die Übertragung des Antriebsdrehmoments unterliegt. Die Durchführung des kreisscheibenförmigen Elements kann eine Bohrung sein, die eine Passfläche für die Welle bildet. Anders ausgedrückt kann das kreisscheibenförmige Element über die Durchführung mit der Welle verdrehfest verbunden sein. Denkbar ist, dass die Durchführung als Klemmung oder Passung, vorzugsweise als Presspassung gegenüber der Welle ausgebildet ist. Dass das Element kreisscheibenförmig ist, kann hier bedeuten, dass es sich im Bereich der Lauffläche um eine im Wesentlichen scheibenförmige Anordnung mit einem kreisförmigen Außenrand handelt, der konzentrisch zur Durchführung ist. Vorzugsweise kann das kreisscheibenförmige Element zur Wartung oder bei einem Verschleiß austauschbar ausgebildet sein.

Die Welle kann mit wenigstens einem Lager zwischen dem Rotor und dem Drehteller drehbar gelagert sein, wobei das kreisscheibenförmige Element von der Lagerwirkung des Lagers entkoppelt ist. Anders ausgedrückt kann das kreisscheibenförmige Element getrennt von der Lagerwirkung der Lagerung an der Welle angegliedert sein. Folglich kann das kreisscheibenförmige Element einfacher und damit billiger aufgebaut sein. Beispielsweise kann im Lagerschild zum Rotor hin das Lager angeordnet sein, mit dem die Welle direkt gelagert wird. Ferner kann das kreisscheibenförmige Element zwischen dem Lager und dem Drehteller an der Welle angeordnet sein.

Die Lauffläche kann an einer vom Drehteller abgewandten, ebenen Seite des kreisscheibenförmigen Elements ausgebildet sein, wobei die wenigstens eine Dichtlippe als Axialwellendichtring ausgebildet ist. Dadurch kann das Wellendichtsystem von oben herablaufenden Schmutz besonders gut ableiten, da er zunächst die Oberseite und damit die dem Drehteller zugewandte Seite des kreisscheibenförmigen Elements erreicht. Davon wird der Schmutz durch die Drehung des Drehtellers nach außen hin abgeleitet und gelangt nur äußerst selten in den Bereich der Dichtlippe. Anders ausgedrückt kann die vom Drehteller abgewandte, ebenen Seite des kreisscheibenförmigen Elements eine Unterseite sein, gegen die die Dichtlippe bewirkt. Axialwellendichtring kann hier bedeuten, dass es sich um wenigstens eine Dichtlippe handelt, die im Wesentlichen in axialer Richtung zur Antriebswelle gegen die Lauffläche wirkt.

Denkbar ist auch, dass es sich um zwei Dichtlippen handelt, die als Y-Anordnung gegen die Lauffläche des kreisscheibenförmigen Elements wirken. Dadurch ergibt sich eine besonders gute Dichtwirkung. Die Y-Anordnung der Dichtlippe kann eine weitere innenliegende Dichtlippe und einen Fettvorrat aufweisen.

Das Wellendichtsystem kann ein Speziallager umfassen, an das die wenigstens eine erste Dichtlippe angefügt, vorzugsweise angespritzt ist. Dadurch kann das Wellendichsystem besonders kompakt und montagefreundlich ausgeführt werden. Das Speziallager kann ein Wälzlager, vorzugsweise ein Kugellager, Rollenlager oder dergleichen umfassen, an dessen Außenseite die wenigstens eine Dichtlippe angespritzt ist. Die Innenseite des Wälzlagers kann mit der Welle verbunden sein. Mit "angespritzt" kann hier gemeint sein, dass die Dichtlippe mit einem Spritzgießprozess an das Wälzlager angespritzt ist.

Die Durchführung kann mit einer zur Welle formschlüssigen Befestigungsfläche und/oder einer Dichtung ausgebildet sein. Durch die formschlüssige Befestigungsfläche ist ein besonders sicherer, verdrehfester Sitz des kreisscheibenförmigen Elements an der Welle gewährleistet. Durch die Dichtung wird verhindert, dass sich zwischen dem kreisscheibenförmigen Element und der Welle Verschmutzungen ansammeln. Die Dichtung kann gegenüber der formschlüssigen Befestigungsfläche weiter außen an der Welle, also zum Drehteller hin angeordnet sein. Denkbar ist, dass die formschlüssige Befestigungsfläche eine Presspassung oder einen Teil einer Klemmvorrichtung zur Befestigung des kreisscheibenförmigen Elements an der Welle bildet.

Das kreisscheibenförmige Element kann einen vom drehtellerabgewandten Schutzkragen zur Schmutzabweisung umfassen, der insbesondere als zur Welle konzentrisches Zylindersegment ausgebildet ist, das die Dichtlippe wenigstens teilweise umgibt. Dadurch ist es möglich, dass das Wellendichtsystem auch vor seitlich eindringendem Schmutz gut geschützt ist. Beispielsweise kann sich der Schutzkragen von einem äußeren Rand des kreisförmigen Elements zum Motor hin erstrecken. Dass das konzentrische Zylindersegment die Dichtlippe wenigstens teilweise umgibt, kann hier bedeuten, dass das konzentrische Zylindersegment einen größeren Radius als die Dichtlippe aufweist, so dass sie radial innerhalb des Schutzkragens angeordnet ist.

Die Welle kann zur Anpassung verschiedener Drehtellertypen über einen Drehtelleradapter mit dem Drehteller verbunden sein, der insbesondere einen vom Drehteller abgewandten Ringfortsatz zur Schmutzabweisung umfasst. Dadurch kann die Behälterbehandlungsmaschine besonders einfach an verschiedene Behältertypen angepasst werden. Vorzugsweise kann der Drehtelleradapter vollständig außerhalb des Motorgehäuses bzw. des Lagerschilds angeordnet sein. Durch den Ringfortsatz ist das Wellendichtsystem noch besser vor Schmutz geschützt. Vorzugsweise kann der Ringfortsatz des Drehtellers zusammen mit dem zuvor beschriebenen Schutzkragen des kreisscheibenförmigen Elements eingesetzt werden, wodurch ein besonders guter Schutz des Wellendichtsystems gewährleistet ist. Der Ringfortsatz kann ebenfalls als zur Welle konzentrisches Zylindersegment ausgebildet sein, dass das Wellendichtsystem wenigstens teilweise umgibt.

Die wenigstens eine erste Dichtlippe kann mit einem Stützelement zur Stabilisierung und/oder mit einem Spannelement zum Aufbringen einer Kraft gegen die Lauffläche ausgebildet sein. Da die Dichtlippe üblicherweise aus einem flexiblen Material hergestellt wird, kann mit dem Stützelement eine bessere Stabilität bewirkt werden, so dass die Dichtlippe ihre Position gegenüber der Lauffläche nicht verändert. Durch das Spannelement ist es möglich, die Dichtlippe gegen die Lauffläche zu drücken, um eine zuverlässige Dichtwirkung zu gewährleisten. Das Spannelement kann beispielsweise eine Feder sein.

Das Wellendichtsystem umfasst ein Ringelement mit der ersten Lauffläche, einer zweiten Lauffläche und mit einer die Welle umschließenden Durchführung, wobei die wenigstens eine erste Dichtlippe radial nach innen gerichtet gegen die erste Lauffläche und eine zweite Dichtlippe radial nach außen gerichtet gegen die zweite Lauffläche wirkt. Dadurch wirken die beiden Dichtlippen radial gegen die jeweilige Lauffläche, wodurch sich Fertigungstoleranzen des Motors und des Wellendichtsystems in vertikaler Richtung nicht auf die Zuverlässigkeit der Dichtwirkung auswirken und zu Streuungen der Reibwirkung führen. Darüber hinaus sinken dadurch Anforderungen an die Toleranzen beim Einbau des Wellendichtsystems.

Dadurch, dass kein Antriebsdrehmoment mit dem Ringelement übertragen wird, kann die Welle einerseits besonders für die Übertragung des Antriebsdrehmoments zum Drehteller hin und das Ringelement besonders für die Dichtwirkung ausgelegt werden. Folglich kann also die Welle aus einem weicheren Material bestehen, da sie nicht mehr mit der Dichtlippe in Kontakt kommt und so keinen Verschleiß erfährt. Folglich kann die einteilige Welle einfacher hergestellt werden. Dagegen kann das Ringelement für die Bereitstellung der Dichtwirkung aus einem speziell dafür geeigneten Material hergestellt werden, beispielsweise aus einem gehärteten Metall. Das gehärtete Metall kann ein nicht rostentender Stahl sein, der beispielsweise eine Härte von 55 -58 HRC aufweist und vorzugsweise drallfrei geschliffen ist. Als Werkstoff für das Ringelement kann beispielsweise 1.4034 (Kurzname X46Cr13) oder ein vergleichbares Material verwendet werden. Die Laufflächen können ein Oberflächenrauheit von Ra = 0,2 bis 0,8 µm, Rz = 1,0 bis 4,0 µm und Rmax. 6,3 µm aufweisen. Dadurch wird ein hoher Verschleiß durch die gegen die Laufflächen wirkenden Dichtlippen vermieden und das Wartungsintervall kann erhöht werden. Beim Betrieb des Drehtellerdirektantriebs können so weitere Kosten eingespart werden. Darüber hinaus kann das Ringelement auch bezüglich des Bauraums kompakt ausgelegt werden, da es keiner Ermüdung durch die Übertragung des Antriebsdrehmoments unterliegt. Die Durchführung des Ringelements kann zylindrisch sein und/oder eine Passfläche für die Welle bilden. Anders ausgedrückt kann das Ringelement über die Durchführung mit der Welle verdrehfest verbunden sein. Denkbar ist, dass die Durchführung als Klemmung oder Passung, vorzugsweise als Presspassung gegenüber der Welle ausgebildet ist. "Ringelement" kann hier bedeuten, dass die erste Lauffläche und die zweite Lauffläche konzentrisch zur Durchführung ausgebildet sind. Vorzugsweise kann das Ringelement zur Wartung oder bei einem Verschleiß austauschbar ausgebildet sein.

Denkbar ist, dass das Ringelement eine vorzugsweise ebene Stirnseite umfasst. Die erste Lauffläche und die zweite Lauffläche können von der Stirnseite abstehen und/oder über diese miteinander verbunden sein. Denkbar ist, dass das Ringelement rotationssymmetrisch zur Welle ausgebildet ist und ein im Wesentlichen U-förmiges Profil aufweist.

Die erste Lauffläche und die zweite Lauffläche können am Ringelement als zur Durchführung konzentrische Zylinderflächen ausgebildet sein, zwischen denen die wenigstens eine erste Dichtlippe und die zweite Dichtlippe angeordnet sind. Dadurch wirken sich die weiter oben angesprochenen Fertigungstoleranzen des Motors und des Wellendichtsystems in einem besonders geringen Maße auf die Dichtwirkung aus. Vorzugsweise können die als konzentrische Zylinderflächen ausgebildete erste Lauffläche bzw. zweite Lauffläche senkrecht von der Stirnseite des Ringelements abstehen, insbesondere vertikal nach unten gerichtet. Mit "vertikal" kann hier die Richtung gemeint sein, die auf den Erdmittelpunkt zeigt. Dadurch wird verhindert, dass Schmutzpartikel von außen in das Wellendichtsystem eindringen.

Eine dritte Dichtlippe kann radial nach innen gerichtet gegen die erste Lauffläche wirken, insbesondere wobei sich zwischen der wenigstens einen ersten Dichtlippe und der dritten Dichtlippe ein Fettvorrat befindet. Dadurch wird die Dichtwirkung des Wellendichtsystems weiter erhöht. Zudem kann sich zwischen der wenigstens einen ersten Dichtlippe und der zweiten Dichtlippe ein Fettvorrat befinden. Durch den Fettvorrat werden der Verschleiß der Dichtlippen und das Eindringen von Schmutzpartikeln verringert.

Die wenigstens eine erste Dichtlippe, die zweite Dichtlippe und/oder die dritte Dichtlippe können einstückig als Dichtring ausgebildet sein und/oder aus einem flexiblen Material wie beispielsweise Gummi bestehen. Vorzugsweise können die wenigstens eine erste Dichtlippe, die zweite Dichtlippe und die dritte Dichtlippe von einem Trägerring radial abstehen.

Vorzugsweise können die wenigstens eine erste Dichtlippe, die zweite Dichtlippe, die dritte Dichtlippe und/oder der Dichtring an dem Lagerschild und/oder dem Gehäuse des Motors angegliedert sein. Das Lagerschild kann eine umfänglich am Wellendichtsystem angeordnete, konische Ableitfläche umfassen, die insbesondere im Profil schräg nach außen hin abfällt. Dadurch werden eindringende Schmutzpartikel nach außen hin abgeleitet.

Der Drehteller oder der Drehtelleradapter kann zur Schmutzabweisung einen vorzugsweise an der Unterseite angeordneten Schutzkragen umfassen. Der Schutzkragen kann mit seiner Unterseite der konischen Ableitfläche gegenüberliegend angeordnet sein, so dass ein Spalt zum Ableiten von Schmutzpartikeln gebildet wird.

Weite Merkmale und Vorteile der Erfindung werden nachfolgend anhand der in den Figuren dargestellten Ausführungsbeispiele näher erläutert. Dabei zeigt:
- Figur 1: ein Ausführungsbeispiel des Drehtellerdirektantriebs mit einem nicht unter die Erfindung fallenden Wellendichtsystem in einer seitlichen Ansicht;
- Figur 2: ein weiteres Ausführungsbeispiel eines nicht unter die Erfindung fallenden Wellendichtsystems in einer seitlichen Detailansicht;
- Figur 3: ein Ausführungsbeispiel des Wellendichtsystems in einer seitlichen Ansicht; und
- Figur 4: ein Ausführungsbeispiel einer Behälterbehandlungsmaschine mit dem Drehtellerdirektantrieb nach der Fig. 1, 2 oder 3.

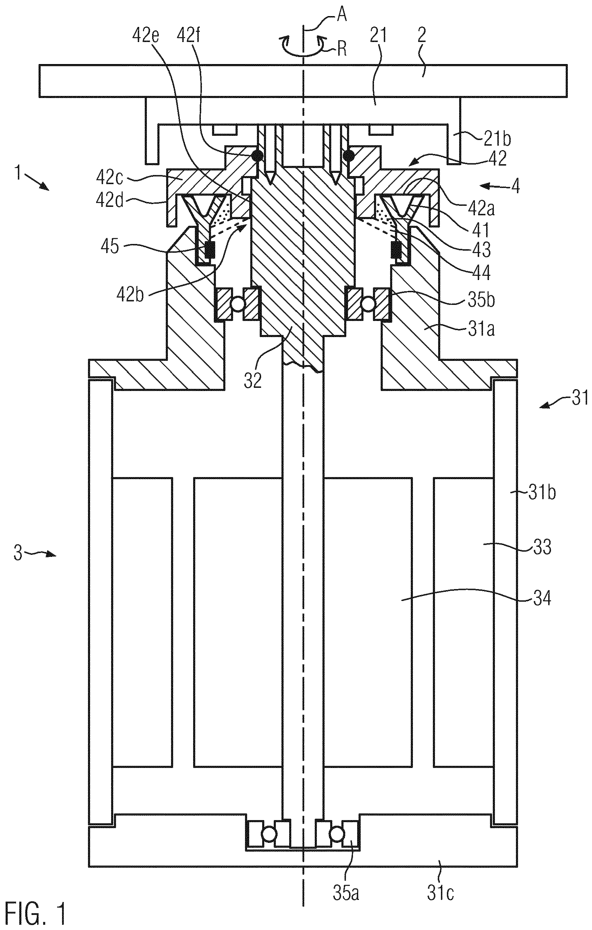

In der Figur 1 ist ein Ausführungsbeispiel des Drehtellerdirektantriebs 1 mit einem nicht unter die Erfindung fallenden Wellendichtsystem 4 in einer seitlichen Ansicht dargestellt. Zu sehen ist der Drehtellerdirektantrieb 1 mit dem Motor 3, in dessen Gehäuse 31 sich der Stator 33 und der Rotor 34 befinden. Der Rotor 34 ist drehfest mit der Welle 32 verbunden, an deren oberen Ende der Drehteller 2 befestigt ist. Die Welle 32 ist zur Übertragung des Antriebsdrehmoments auf den Drehteller 2 wenigstens ab dem Rotor 34 bis durch das Wellendichtsystem 4 hindurch einteilig ausgebildet. Das Wellendichtsystem 4 dient dazu, den Innenbereich des Motors 3 vor eindringendem Schmutz und/oder Feuchtigkeit zu schützen.

Das Motorgehäuse 31 besteht aus einem Gehäuserumpf 31b, der an den Enden einerseits mit dem Lagerschild 31a (Gehäusedeckel) und andererseits mit dem Gehäuseboden 31c hermetisch abgeschlossen ist. Die Welle 32 wird durch die zwei Kugellager 35a und 35b im Lagerschild 31a bzw. im Gehäuseboden 31c drehbar gelagert. Zum Schutz des Motors vor eindringendem Schmierfett kann das oben dargestellte Kugellager 35b als Rillenkugellager mit zwei Dichtscheiben ausgeführt sein. Gegebenenfalls kann auch das unten dargestellte Kugellager 35a so ausgeführt sein. Denkbar sind jedoch auch andere geeignete Lagertypen bzw. Lageanordnungen.

Wird nun am Stator 33 ein geeigneter Wechselstrom angelegt, der von einer hier nicht dargestellten Motorregelung aus einem Gleichstrom erzeugt wird, so wird der Rotor 34 durch die elektromagnetischen Kräfte in Bewegung versetzt und damit die Welle 32 und der Drehteller 2 um die Antriebsachse A in Richtung R gedreht bzw. geschwenkt. Der Motor ist hier beispielsweise als Servomotor ausgebildet und umfasst weiter einen nicht näher dargestellten Drehgeber (beispielsweise Hall-Sensoren oder einen optisch bzw. magnetischen Encoder). Dadurch kann die gewünschte Winkeldrehlage der Welle 32 und damit des Drehtellers 2 über die Motorregelung genau eingestellt werden. Denkbar sind jegliche Arten von Elektromotoren (beispielsweise ein Gleichstrom-, Asynchron- oder Synchronmotor), die mit einem geschlossenen Regelkreis betrieben werden. Grundsätzlich denkbar wäre auch ein Schrittmotor mit oder ohne geschlossenen Regelkreis.

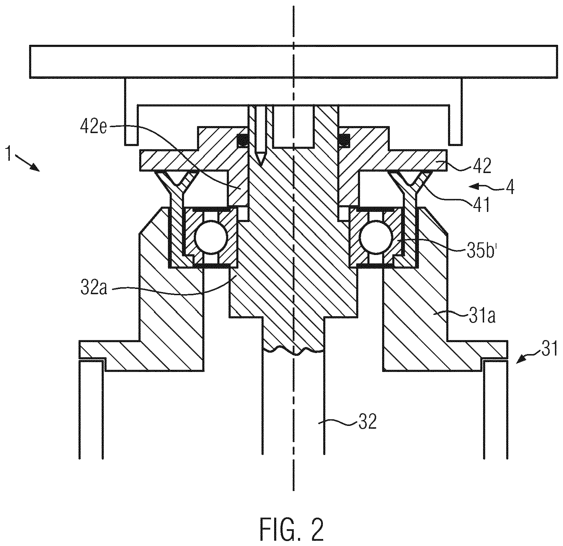

Der in der Figur 1 dargestellte Drehtellerdirektantrieb 1 befindet sich beispielsweise am Transportkarussell einer Behälterbehandlungsmaschine, vorzugsweise einer Etikettiermaschine, die weiter unten anhand der Figur 2 genauer beschrieben wird. Dadurch können Behälter auf dem Drehteller 2 bei der Etikettierung in gewünschter Art und Weise gedreht werden.

Der Drehteller 2 umfasst eine kreisförmige Platte auf deren Oberseite die Behälter aufgenommen werden können. Es ist auch zu sehen, dass die Welle 32 zur Anpassung an verschiedene Drehtellertypen über den Drehtelleradapter 21 mit dem Drehteller 2 verbunden ist. Dadurch lässt sich der Drehteller 2 besonders einfach austauschen. Darüber hinaus ist optional am Drehtelleradapter 21 der Ringfortsatz 21b nach unten hin, also vom Drehteller 2 abgewandt gezeigt. Dadurch wird die Oberseite des Wellendichtsystems 4 vor Verschmutzungen geschützt.

Ferner ist in der Figur 1 zu sehen, dass der Motor 3 im Bereich der Wellendurchführung zum Drehtelleradapter 21 hin mit dem Wellendichtsystem 4 abgedichtet ist. Dazu wirkt die im Lagerschild 31a angeordnete Dichtlippe 41 gegen die sich mit der Welle 32 mitdrehende Lauffläche 42a.

Das Wellendichtsystem 4 umfasst das kreisscheibenförmige Element 42 mit der Lauffläche 42a und mit einer die Welle 32 umschließende Durchführung 42b. Dadurch, dass das kreisscheibenförmige Element 42 über die Durchführung 42b als Ring auf die Welle 32 getrennt vom Lager 35b aufgesetzt ist, wird es von der Übertragung des Antriebsdrehmoments entkoppelt. Dadurch ist es möglich, das kreisscheibenförmige Element 42 aus einem für die Dichtwirkung und für einen geringen Verschleiß geeigneten Material herzustellen, beispielsweise aus einem gehärteten Stahlmaterial. Da das kreisscheibenförmige Element 4 ein Drehteil mit vergleichsweise geringer Masse ist, kann es besonders einfach und kostengünstig hergestellt werden.

Demgegenüber kann für die Welle 32 ein Material verwendet werden, das besonders einfach zu bearbeiten ist, da es im Betrieb keinem Verschleiß durch das Wellendichtsystem unterliegt. Darüber hinaus kann die Welle 32 zur optimalen Übertagung des Antriebsdrehmoments ausgelegt werden.

Zu sehen ist auch, dass die Welle 32 zwischen dem Rotor 34 und dem Drehteller 2 durch das Lager 35b drehbar gelagert wird. Demgegenüber ist das kreisscheibenförmige Element 42 mit seiner Durchführung 42b gegenüber der Lagerung außerhalb zum Drehteller 2 hin mit der Welle 32 verbunden, so dass es von der Lagerwirkung entkoppelt ist.

Zudem ist die Durchführung 42b mit der zur Welle formschlüssigen Befestigungsfläche 42e sowie mit einem Dichtring 42f ausgebildet. Dadurch bildet die formschlüssige Befestigungsfläche 42e einen Passsitz, so dass eine verdrehfeste Verbindung zur Welle 32 hergestellt wird. Durch den Dichtring 42f wird zusätzlich verhindert, dass Schmutz ins Innere des Motors 3 gelangt.

Die Lauffläche 42a ist an einer vom Drehteller 2 abgewandten, ebenen Seite des kreisscheibenförmigen Elements 42 am Scheibenkörper 42c ausgebildet, also in Richtung der Motorinnenseite. Folglich ist die Lauffläche 42a im Wesentlichen senkrecht zur Drehachse A angeordnet. Gegen die Lauffläche 42a wirken zwei Dichtlippen 41 in Y-Anordnung und bilden einen Axialwellendichtring. Dadurch wirken die Dichtlippen 41 im Wesentlichen in axialer Richtung gegen die Lauffläche 42a. Denkbar ist zusätzlich, dass zwischen den zwei Dichtlippen 41 in Y-Anordnung ein Fettvorrat zum Schmieren des Wellendichtsystems 4 vorhanden ist.

Darüber hinaus umfasst das kreisscheibenförmige Element 42 einen vom Drehteller 2 abgewandten Schutzkragen 42d, um vom Drehteller 2 herablaufenden Schmutz aus dem Dichtungsbereich der Dichtlippe 41 abzuweisen. Der Schutzkragen 42d ist als zur Welle 32 konzentrisches Zylindersegment ausgebildet, das die Dichtlippe 41 umgibt. Anders ausgedrückt, weist der als konzentrisches Zylindersegment ausgebildete Schutzkragen 42d einen etwas größeren Durchmesser auf als die Dichtlippen 41 und ist am äußeren Rand des Scheibenkörpers 42c zum Lagerschild 31a hin zylindrisch ausgebildet. Folglich wird eindringender Schmutz nach unten hin abgeleitet. Der Schutzkragen 42d ist optional und kann daher auch entfallen, wie dies beispielsweise in der Fig. 2 gezeigt ist.

Die Dichtlippen 41 in Y-Anordnung werden über das Stützelement 45 stabilisiert und im Lagerschild 31a gehaltert. Die Dichtlippen 41 sind ferner aus dem Lagerschild 31a zum Austausch herausnehmbar. Vorzugsweise sind die Dichtlippen 41 in einer Dichtkassette enthalten, die lösbar mit dem Lagerschild 31a verbindbar ist.

Denkbar ist auch, dass in Abwandlung der Y-Anordnung der Dichtlippen 41 lediglich eine Dichtlippe vorhanden ist. Diese ist dann vorzugsweise gegenüber der Antriebsachse A schräg nach oben und außen gerichtet, sodass der Schmutz durch die Außenseite der Dichtlippe abgeleitet wird.

Weiterhin kann optional an der Y-Anordnung der Dichtlippen 41 eine weitere innenliegende Dichtlippe 44 mit einem Fettvorrat 43 zum Schmieren des Wellendichtsystems 4 angeordnet sein. Zudem kann die mittlere Dichtlippe zwischen den Dichtlippen 41 und 44 auch komplett entfallen. Es kann auch nur die Dichtlippe 41 angeordnet sein. Ein Fettvorrat würde dann den jeweilig sich ergebenden Innenraum zum Schmieren des Wellendichtsystems angeordnet sein können.

Durch das in der Figur 1 gezeigte Dichtsystem 4 ist es möglich, die Dichtwirkung von der Lagerwirkung bzw. Übertragung des Antriebsdrehmoments zu entkoppeln. Dadurch ist es möglich, jeweils besonders geeignete Materialien einzusetzen und die Elemente kostengünstig herzustellen. Ferner kann durch die dünnere Konstruktion der Welle 32 Bauraum eingespart werden.

In der Figur 2 ist ein weiteres Ausführungsbeispiel eines nicht unter die Erfindung fallenden Wellendichtsystems 4 in einer seitlichen Detailansicht dargestellt. Es unterscheidet sich vom Ausführungsbeispiel in der Figur 1 lediglich dadurch, dass ein Speziallager 35b' zum Einsatz kommt, bei dem die Dichtlippen 41 an das Wälzlager angespritzt sind. Das Lagerschild 31a ist dementsprechend mit einer zylindrischen Passfläche ausgebildet, so dass die Außenseite des Speziallagers 35b' darin befestigt werden kann. Zu sehen ist auch, dass das Speziallager 35b' an der Innenseite zwischen dem Rand 32a der Welle 32 und dem kreisscheibenförmigen Element 42 vorzugsweise mit dem unteren Ende der formschlüssigen Befestigungsfläche 42e eingespannt ist. Folglich kann das Speziallager 35b' besonders einfach von der Welle 32 gelöst und ersetzt werden.

Durch das in der Figur 2 gezeigte Speziallager 5b' ist das Wellendichtsystem 4 besonders kompakt und montagefreundlich aufgebaut.

Zu sehen ist in der Figur 2 auch, dass das kreisscheibenförmige Element 42 ohne Schutzkragen ausgebildet ist. Optional kann er jedoch auch wie in der Figur 1 vorhanden sein.

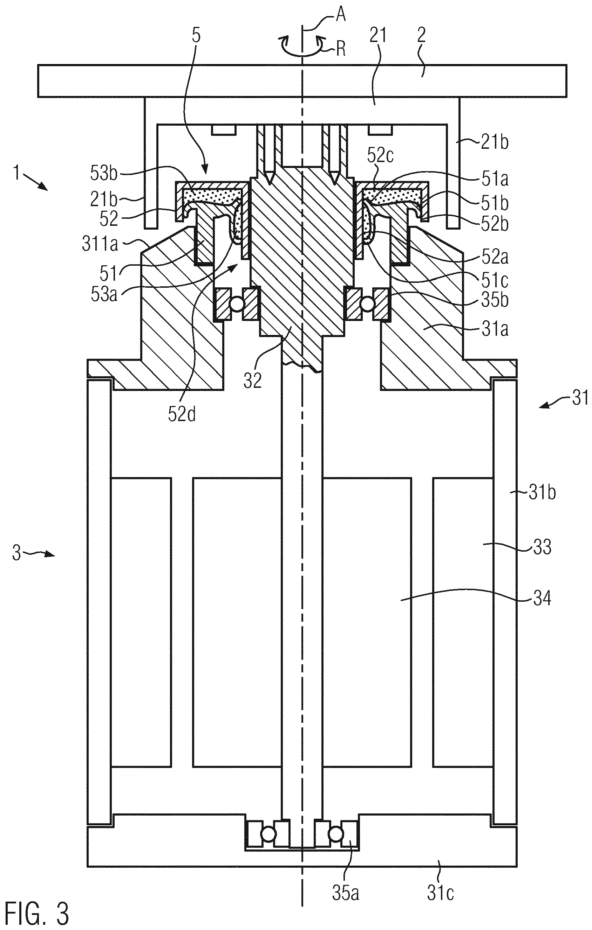

Ferner ist in der Figur 3 ein Ausführungsbeispiel des erfindungsgemäßen Wellendichtsystems 5 in einer seitlichen Ansicht dargestellt. Das Ausführungsbeispiel in der Figur 3 unterscheidet sich von dem der Figur 1 im Wesentlichen durch den Aufbau des Wellendichtsystems 5. Alle anderen Merkmale gelten entsprechend.

Zu sehen ist, dass der Motor 3 im Bereich der Wellendurchführung zum Drehtelleradapter 21 hin mit dem Wellendichtsystem 5 abgedichtet ist. Dazu wirken die im Lagerschild 31a angeordnete erste und dritte Dichtlippe 51a, 51c radial nach innen gerichtet gegen die sich mit der Welle 32 mitdrehend verbundene erste Lauffläche 52a bzw. die zweite Dichtlippe 51b radial nach außen gerichtet gegen die mit der Welle 32 mitdrehend verbundene zweite Lauffläche 52b.

Das Wellendichtsystem 5 umfasst den Dichtring 51 mit der ersten, zweiten und dritten Dichtlippe 51a, 51b, 51c und das Ringelement 52 mit der ersten und zweiten Lauffläche 52a, 52b. Das Wellendichtsystem 5 kann zudem als austauschbare Dichtkassette aufgebaut sein.

Zu sehen ist, dass die erste Dichtlippe 51a, die zweite Dichtlippe 51b und die dritte Dichtlippe 51c einstückig als Dichtring 51 ausgebildet sind und von einem Trägerring abstehen. Um eine besonders gute Dichtwirkung zu gewährleisten, bestehen die Dichtlippen 51a, 51b und 51c aus einem flexiblen Material, wie beispielsweise Gummi. Denkbar ist auch hier, dass der Dichtring 51, ähnlich wie in der Figur 1, mit einem Stützelement zur Stabilisierung versehen ist.

Das Ringelement 52 ist mit der ersten Lauffläche 52a, der zweiten Lauffläche 52b und mit einer die Welle 32 umschließende Durchführung 52d ausgebildet. Dadurch, dass das Ringelement 52 über die Durchführung 52d als Ring auf die Welle 32 getrennt vom Lager 35b aufgesetzt ist, wird es von der Übertragung des Antriebsdrehmoments entkoppelt. Dadurch ist es möglich, das Ringelement 52 aus einem für die Dichtwirkung und für einen geringen Verschleiß geeigneten Material herzustellen, beispielsweise aus einem gehärteten Stahlmaterial. Demgegenüber kann für die Welle 32 ein Material verwendet werden, das besonders einfach zu bearbeiten ist, da es im Betrieb keinem Verschleiß durch das Wellendichtsystem 5 unterliegt. Darüber hinaus kann die Welle 32 zur optimalen Übertagung des Antriebsdrehmoments ausgelegt werden.

Zudem ist die Durchführung 52d mit einer zur Welle formschlüssigen Befestigungsfläche ausgebildet. Dadurch bildet die formschlüssige Befestigungsfläche einen Passsitz, so dass eine verdrehfeste Verbindung zur Welle 32 hergestellt wird.

Die erste Lauffläche 52a und die zweite Lauffläche 52b sind am Ringelement 52 als zur 52d konzentrische Zylinderflächen ausgebildet, zwischen denen die erste Dichtlippe 51a, die zweite Dichtlippe 51b und die dritte Dichtlippe 51c angeordnet sind. Anders ausgedrückt bilden die erste Lauffläche 52a und die zweite Lauffläche 52b einen ringförmigen Spalt, in den die Dichtlippen 51a, 51b und 51c hineinragen.

Darüber hinaus umfasst das Ringelement 52 die Stirnseite 52c, von der die erste Lauffläche 52a und die zweite Lauffläche 52b vertikal nach unten hin abstehen. Die Stirnseite 52c ist hier kreisscheibenförmig bzw. als ebene Fläche ausgebildet. Denkbar ist jedoch auch, dass die Stirnseite 52c im Profil eine Krümmung aufweist.

Um den Verschleiß der Dichtlippen 51a, 51b und 51c zu verringern, befinden sich zwischen der ersten Dichtlippe 51a und der dritten Dichtlippe 51c sowie zwischen der ersten Dichtlippe 51a und der zweiten Dichtlippe 51b Fettvorräte 53a, 53b. Dadurch wird auch verhindert, dass Schmutzpartikel durch das Wellendichtsystem 5 hindurch in das Innere des Motors 3 eindringen.

Zu sehen ist auch, dass die Welle 32 zwischen dem Rotor 34 und dem Drehteller 2 durch das Lager 35b drehbar gelagert wird. Demgegenüber ist das Ringelement 52 mit seiner Durchführung 52d außerhalb weiter zum Drehteller 2 hin angeordnet und mit der Welle 32 verbunden, so dass es von der Lagerwirkung entkoppelt ist.

Das Lagerschild 31a umfasst die umfänglich am Wellendichtsystem 5 angeordnete, konische Ableitfläche 311a, die im Profil schräg nach außen hin abfällt. Dadurch werden eindringende Schmutzpartikel nach außen hin abgeleitet.

Ferner umfasst der Drehtelleradapter 21 zur Schmutzabweisung einen vorzugsweise an der Unterseite angeordneten Schutzkragen 21b. Der Schutzkragen 21b ist mit seiner Unterseite der konischen Ableitfläche 311a gegenüberliegend angeordnet, so dass ein Spalt zum Ableiten von Schmutzpartikeln gebildet wird. Zudem können durch den so gestalteten Spalt besonders wenig Schmutzpartikel von außen zum Wellendichtsystem 5 hin eindringen.

Dadurch, dass die Dichtlippen 51a, 51b und 51c radial nach innen bzw. nach außen gerichtet gegen die erste Lauffläche 52a bzw. die zweite Lauffläche 52b wirken, führen Toleranzen des Drehtellerdirektantriebs 1, insbesondere des Dichtsystems 5 und des Motors 3 in vertikaler Richtung nicht zu einer unzuverlässigen Dichtwirkung und zu Streuungen der Reibwirkung. Darüber hinaus sinken dadurch Anforderungen an die Toleranzen beim Einbau des Wellendichtsystems 5.

Durch das in der Figur 3 gezeigte Dichtsystem 5 ist es zudem möglich, die Dichtwirkung von der Lagerwirkung bzw. Übertragung des Antriebsdrehmoments zu entkoppeln. Dadurch ist es möglich, jeweils besonders geeignete Materialien einzusetzen und die Elemente kostengünstig herzustellen. Ferner kann durch die dünnere Konstruktion der Welle 32 Bauraum eingespart werden.

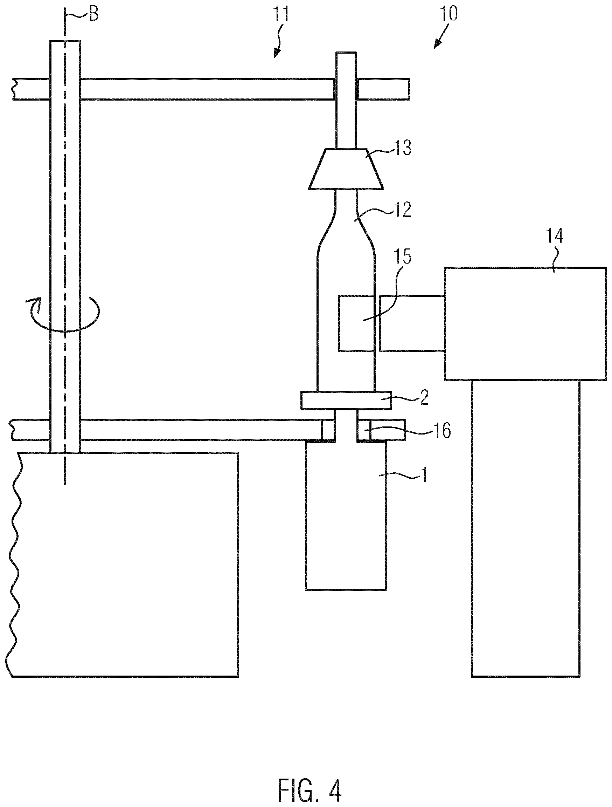

In der Figur 4 ist ein Ausführungsbeispiel einer Behälterbehandlungsmaschine 10 in einer Seitenansicht dargestellt, die hier als Etikettiermaschine ausgebildet ist. Zu sehen ist das Transportkarussell 11 mit den umfänglich angeordneten Drehtellern 2 und jeweils einem Drehtellerdirektantrieb 1. Diese können für sich oder zusammen mit den Zentrierglocken 13 die Behälteraufnahmen bilden. Zur Übersichtlichkeit ist hier nur ein Drehteller 2 mit einem Direktantrieb 1 dargestellt, es befinden sich jedoch umfänglich am Transportkarussell 11 eine Vielzahl derartiger Anordnungen in regelmäßigen Winkelabständen. Das Transportkarussell 11 dreht sich um seine Karussellachse B mittels eines hier nicht näher dargestellten Antriebs.

Im Betrieb werden die Behälter 12 mit dem Drehteller 2 und/oder der Zentrierglocke 13 eingespannt und am Etikettieraggregat 14 vorbeigeführt. Beim Etikettieren werden sie mittels des Direktantriebs 1 definiert gedreht, so dass das Etikett 15 möglichst gleichmäßig am Behälterumfang angebracht wird.

Der von oben und von der Seite her eindringende Schmutz wird beim Direktantrieb 1 mit einem Dichtsystem 4, 5 entsprechend den Ausführungsbeispielen in den Fig. 1, 2 oder 3 nach außen hin abgeleitet, so dass der innere Aufbau des Drehtellerdirektantriebs 1 nicht beschädigt wird. Es versteht sich, dass in den zuvor beschriebenen Ausführungsbeispielen genannte Merkmale nicht auf diese speziellen Kombinationen beschränkt sind und in beliebigen anderen Kombinationen möglich sind, soweit diese den Schutzumfang der nachfolgenden Ansprüche nicht verlassen.

## Patentansprüche

1. Behälterbehandlungsmaschine (10) mit wenigstens einer einen Drehteller (2) umfassenden Behälteraufnahme und einem Drehtellerdirektantrieb (1) zum Antreiben des Drehtellers (2), wobei der Drehtellerdirektantrieb (1) einen Motor (3) umfasst, der mit einem Stator (33), einem Rotor (34), einer mit dem Rotor (34) verbundenen Welle (32) zum Übertragen eines Antriebsdrehmoments auf den Drehteller (2) und mit einem Wellendichtsystem (4, 5) zur Abdichtung der Welle (32) ausgebildet ist, wobei das Wellendichtsystem (4, 5) eine erste Lauffläche (42a, 52a) und wenigstens eine erste dagegen wirkende Dichtlippe (41, 51a) umfasst,
wobei die Welle (32) wenigstens ab dem Rotor (34) und durch das Wellendichtsystem (4, 5) hindurch einteilig ausgebildet ist, und
wobei die erste Lauffläche (42a, 52a) von der Übertragung des Antriebsdrehmoments entkoppelt mit der Welle (32) mitdrehend verbunden ist,
**dadurch gekennzeichnet, dass**
das Wellendichtsystem (5) ein Ringelement (52) mit der ersten Lauffläche (52a), einer zweiten Lauffläche (52b) und mit einer die Welle (32) umschließenden Durchführung (52d) umfasst, und wobei die wenigstens eine erste Dichtlippe (51a) radial nach innen gerichtet gegen die erste Lauffläche (52a) und eine zweite Dichtlippe (51b) radial nach außen gerichtet gegen die zweite Lauffläche (52b) wirkt.

2. Behälterbehandlungsmaschine (10) nach Anspruch 1, wobei das Wellendichtsystem (4, 5) ein Speziallager (35b') umfasst, an das die wenigstens eine erste Dichtlippe (41, 51a) angefügt, vorzugsweise angespritzt ist.

3. Behälterbehandlungsmaschine (10) nach Anspruch 1 oder 2, wobei die Welle (32) zur Anpassung verschiedener Drehtellertypen über einen Drehtelleradapter (21) mit dem Drehteller (2) verbunden ist, der insbesondere einen vom Drehteller (2) abgewandten, Ringfortsatz (21b) zur Schmutzabweisung umfasst.

4. Behälterbehandlungsmaschine (10) nach einem der Ansprüche 1 - 3, wobei die wenigstens eine erste Dichtlippe (41, 51a) mit einem Stützelement (45) zur Stabilisierung und/oder mit einem Spannelement zum Aufbringen einer Kraft gegen die Lauffläche (41) ausgebildet ist.

5. Behälterbehandlungsmaschine (10) nach einem der Ansprüche 1 - 4, wobei die wenigstens eine erste Dichtlippe (41, 51a) an einem Lagerschild (31a) und/oder einem Gehäuse (31) des Motors (3) angegliedert ist.

6. Behälterbehandlungsmaschine (10) nach einem der Ansprüche 1 - 5, wobei die erste Lauffläche (52a) und die zweite Lauffläche (52b) am Ringelement (52) als zur Durchführung (52d) konzentrische Zylinderflächen ausgebildet sind, zwischen denen die wenigstens eine erste Dichtlippe (51a) und die zweite Dichtlippe (51b) angeordnet sind.

7. Behälterbehandlungsmaschine (10) nach einem der Ansprüche 1 - 6, wobei eine dritte Dichtlippe (51c) radial nach innen gerichtet gegen die erste Lauffläche (52a) wirkt, insbesondere wobei sich zwischen der wenigstens einen ersten Dichtlippe (51a) und der dritten Dichtlippe (51c) ein Fettvorrat (53a) befindet.

8. Behälterbehandlungsmaschine (10) nach einem der Ansprüche 1 - 7, wobei sich zwischen der wenigstens einen ersten Dichtlippe (51a) und der zweiten Dichtlippe (51b) ein Fettvorrat (53b) befindet.

## Claims

1. Container-handling machine (10) having at least one container receiving means comprising a rotary plate (2) and a rotary plate-direct drive (1) for driving the rotary plate (2), the rotary plate direct drive (1) comprising a motor, (3) which is provided with a stator (33), a rotor (34), a shaft (32) connected to the rotor (34) for transmitting the driving torque to the rotary plate (2) and with a shaft-sealing system (4, 5) for sealing the shaft (32), wherein the shaft-sealing system (4, 5) comprises a first running surface (42a, 52a) and at least one first sealing lip (41, 51a) acting against it,
wherein the shaft (32) is formed in one piece at least from the rotor (34) and through the shaft-sealing system (4, 5), and
wherein the first running surface (42a, 52a) is rotatably connected to the shaft (32) from the transmission of the drive torque in a decoupled manner,
**characterized in that**
the shaft-sealing system (5) comprises a ring element (52) with the first running surface (52a), a second running surface (52b) and with a feedthrough (52d) enclosing the shaft (32), and wherein the at least one first sealing lip (51a) acts radially inwardly directed against the first running surface (52a) and a second sealing lip (51b) acts radially outwardly directed against the second running surface (52b).

2. Container-handling machine (10) according to claim 1, wherein the shaft-sealing system (4, 5) comprises a special bearing (35b'), to which the at least one first sealing lip (41, 51a) is attached, preferably injection-molded.

3. Container-handling machine (10) according to claim 1 or 2, the shaft (32) being connected to the rotary plate (2) via a rotary plate adapter (21) for adapting different rotary plate types, the rotary plate (2), comprising in particular an annular extension (21b) facing away from the rotary plate (2) for repelling dirt.

4. Container-handling machine (10) according to one of claims 1 - 3, wherein the at least one first sealing lip (41, 51a) is formed with a supporting element (45) for stabilization and/or with a clamping element for applying a force against the running surface (41).

5. Container-handling machine (10) according to one of claims 1 - 4, wherein at least one first sealing lip (41, 51a) is attached to a bearing plate (31a) and/or a housing (31) of the motor (3).

6. Container-handling machine (10) according to one of claims 1 - 5, wherein the first running surface (52a) and the second running surface (52b) on the ring element (52) are formed as cylinder surfaces concentric with the feedthrough (52d), between which the at least one first sealing lip (51a) and the second sealing lip (51b) are arranged.

7. Container-handling machine (10) according to one of claims 1 - 6, a third sealing lip (51c) acting radially inwards against the first running surface (52a), in particular a grease reservoir (53a) being located between the at least one first sealing lip (51a) and the third sealing lip (51c).

8. Container-handling machine (10) according to one of claims 1 - 7, wherein a grease reservoir (53b) is located between the at least one first sealing lip (51a) and the second sealing lip (51b).

## Revendications

1. Machine de traitement de récipients (10) avec au moins un porte-récipient comprenant un plateau tournant (2) et un entraînement direct de plateau tournant (1) pour l'entraînement du plateau tournant (2), dans laquelle l'entraînement direct de plateau tournant (1) comprend un moteur (3) qui est relié à un stator (33), un rotor (34), un arbre (32) relié au rotor (34) pour transmettre un couple d'entraînement au plateau tournant (2) et avec un système d'étanchéité d'arbre (4, 5) pour assurer l'étanchéité de l'arbre (32), le système d'étanchéité d'arbre (4, 5) comprenant une première surface de roulement (42a, 52a) et au moins une première lèvre d'étanchéité (41, 51a) agissant contre celle-ci, où l'arbre (32) est formé d'une seule pièce au moins à partir du rotor (34) et à travers le système d'étanchéité de l'arbre (4, 5), et
où la première surface de roulement (42a, 52a), découplée de la transmission du couple moteur, est reliée à l'arbre (32) pour tourner avec lui,
**caractérisé en ce que**
le système d'étanchéité d'arbre (5) comprend un élément annulaire (52) avec une première surface de roulement (52a), une deuxième surface de roulement (52b) et avec un passage (52d) entourant l'arbre (32), et où l'au moins une première lèvre d'étanchéité (51a) agit radialement vers l'intérieur contre la première surface de roulement (52a) et une deuxième lèvre d'étanchéité (51b) agit radialement vers l'extérieur contre la deuxième surface de roulement (52b).

2. Machine de traitement de récipients (10) selon la revendication 1, où le système d'étanchéité d'arbre (4, 5) comprend un palier spécial (35bi) auquel est fixée au moins une première lèvre d'étanchéité (41, 51a), de préférence moulée par injection.

3. Machine de traitement de récipients (10) selon la revendication 1 ou 2, où pour l'adaptation de différents types de plateau tournant, l'arbre (32) est relié au plateau tournant (2) par l'intermédiaire d'un adaptateur de plateau tournant (21) qui comprend en particulier un prolongement annulaire (21b) pour la répulsion de la saleté, orienté à l'opposé du plateau tournant (2).

4. Machine de traitement de récipients (10) selon l'une des revendications 1 - 3, où l'au moins une première lèvre d'étanchéité (41, 51a) est formée avec un élément de support (45) pour la stabilisation et/ou avec un élément de serrage pour l'application d'une force contre la surface de roulement (41).

5. Machine de traitement de récipients (10) selon l'une des revendications 1 - 4, où l'au moins une première lèvre d'étanchéité (41, 51a) est fixée à un flasque (31a) et/ou à un boîtier (31) du moteur (3).

6. Machine de traitement de récipients (10) selon l'une des revendications 1 - 5, où la première surface de roulement (52a) et la deuxième surface de roulement (52b) sont réalisées sur l'élément annulaire (52) sous la forme de surfaces cylindriques concentriques au passage (52d), entre lesquelles sont disposées l'au moins une première lèvre d'étanchéité (51a) et la deuxième lèvre d'étanchéité (51b).

7. Machine de traitement de récipients (10) selon l'une des revendications 1 - 6, où une troisième lèvre d'étanchéité (51c) agit radialement vers l'intérieur contre la première surface de roulement (52a), en particulier où un réservoir de graisse (53a) est situé entre l'au moins une première lèvre d'étanchéité (51a) et la troisième lèvre d'étanchéité (51c).

8. Machine de traitement de récipients (10) selon l'une des revendications 1 à 7, où un réservoir de graisse (53b) est prévu entre l'au moins une première lèvre d'étanchéité (51a) et la deuxième lèvre d'étanchéité (51b).
